(19) Europäisches Patentamt
European Patent Office
Office européen des brevets

(11) Veröffentlichungsnummer: **0 621 115 A1**

(12) **EUROPÄISCHE PATENTANMELDUNG**

(21) Anmeldenummer: **94106201.0**

(51) Int. Cl.5: **B27K 3/15**, B27K 3/50

(22) Anmeldetag: **21.04.94**

(30) Priorität: **22.04.93 DE 4313219**

(43) Veröffentlichungstag der Anmeldung:
**26.10.94 Patentblatt 94/43**

(84) Benannte Vertragsstaaten:
**AT BE CH DE FR GB IT LI NL SE**

(71) Anmelder: **WACKER-CHEMIE GMBH**
**Hanns-Seidel-Platz 4**
**D-81737 München (DE)**

(72) Erfinder: **Gerhardinger, Dieter**
**In den Grüben 125**
**D-84489 Burghausen (DE)**
Erfinder: **Mayer, Hans, Dr.**
**Von-Baeyer-Strasse 9**
**D-84489 Burghausen (DE)**
Erfinder: **Kolleritsch, Günther**
**Innstrasse 46**
**D-84525 Neuötting (DE)**

(54) **Verfahren zum Imprägnieren von Holz.**

(57) Bei dem Verfahren wird das Holz mit einer Zusammensetzung behandelt, welche
(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
(B) wasserabweisenden Wirkstoff der bei 20 °C und 1020 hPa nicht fest ist, mit der Maßgabe, daß der wasserabweisende Wirkstoff auch eine bei 20 °C und 1020 hPa feste Organosiliciumverbindung sein kann, die sich unter diesen Bedingungen zu mehr als 50 Gewichtsteilen in 100 Gewichtsteilen (A), gegebenenfalls im Gemisch mit Organosiliciumverbindung mit basischem Stickstoff in Mengen von 0 bis 0,5 Gewichtsprozent, bezogen auf das Gewicht dieser Organosiliciumverbindung, und/oder Kieselsäureestern löst und
(C) Wasser
enthält.

EP 0 621 115 A1

Die Erfindung betrifft ein Verfahren zum Imprägnieren von Holz mit einer wäßrigen Zusammensetzung aus basischen Stickstoff enthaltender Organosiliciumverbindung, wasserabweisendem Wirkstoff und Wasser.

Siliciumorganische Verbindungen werden im Bautenschutz vor allem wegen ihrer hervorragenden Imprägnierwirkung gegen Wasser und Schmutz, ihrer Umweltverträglichkeit und physiologischen Unbedenklichkeit eingesetzt. Für die Wirksamkeit eines Holzschutzmittels ist schnelles und tiefes Eindringen in das Holz wesentlich. Das Eindringen in das Holz wurde bisher durch Lösen von siliciumorganischen Verbindungen in organischem Lösungsmittel oder Wasser gefördert.

In der DE-A-3 900 303 ist die Imprägnierung von Holz mit einer wäßrigen Lösung von Propyltrimethoxysilan beschrieben. In der US-A-5,073,195 ist die Behandlung von Holz mit einer wässrigen Lösung eines wasserlöslichen Silankupplungsmittels und eines Alkyltrialkoxysilans beschrieben. Diese wäßrigen Lösungen sind jedoch nicht lange haltbar, da schnell wasserunlösliche Kondensationsprodukte entstehen, die kaum noch in das Holz eindringen.

In der älteren deutschen Patentanmeldung mit dem Aktenzeichen P 42 41 727 vom 10.12.1992 sind in Wasser selbstdispergierende, Organopolysiloxan enthaltende Zusammensetzungen, die

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,

(B) bei 20 °C und 1020 hPa höchstens zu einem Gewichtsteil in 100 Gewichtsteilen Wasser löslichen Feststoff, ausgenommen bei 20 °C und 1020 hPa feste Organosiliciumverbindungen, die sich unter diesen Bedingungen zu mehr als 50 Gewichtsteilen in 100 Gewichtsteilen (A) gegebenenfalls im Gemisch mit (C) lösen,

und gegebenenfalls

(C) Organosiliciumverbindung mit basischem Stickstoff in Mengen von 0 bis 0,5 Gewichtsprozent, bezogen auf das Gewicht dieser Organosiliciumverbindung,

enthalten, und die Behandlung von Holz mit diesen Zusammensetzungen beschrieben.

Der Erfindung liegt die Aufgabe zugrunde, ein Verfahren zur Imprägnierung von Holz und aus Holz hergestellten Produkten, wie Spanplatten, bereitzustellen, bei dem das Holz besonders wirksam gegen Feuchtigkeit imprägniert wird.

Gegenstand der Erfindung ist ein Verfahren zur Imprägnierung von Holz, bei dem das Holz mit einer Zusammensetzung behandelt wird, welche

(A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,

(B) wasserabweisenden Wirkstoff der bei 20 °C und 1020 hPa nicht fest ist, mit der Maßgabe, daß der wasserabweisende Wirkstoff auch eine bei 20 °C und 1020 hPa feste Organosiliciumverbindung sein kann, die sich unter diesen Bedingungen zu mehr als 50 Gewichtsteilen in 100 Gewichtsteilen (A), gegebenenfalls im Gemisch mit Organosiliciumverbindung mit basischem Stickstoff in Mengen von 0 bis 0,5 Gewichtsprozent, bezogen auf das Gewicht dieser Organosiliciumverbindung, und/oder Kieselsäureestern löst und

(c) Wasser

enthält.

Der Ausdruck "basischer Stickstoff", wie er im Rahmen dieser Erfindung mit Mengenangaben gebraucht wird, bezieht sich auf Stickstoff, berechnet als Element.

Verbindungen, die als Komponente (A) in der imprägnierenden Zusammensetzung eingesetzt werden können, sind bereits bekannt. Hierzu sei beispielsweise auf US-A-4,661,551 verwiesen. Die Komponente (A) wirkt als Tensid und gleichzeitig wasserabweisend.

Die Organopolysiloxane, durch deren Umsetzung mit organischer oder anorganischer Säure Bestandteil (A) der imprägnierenden Zusammensetzung erhältlich ist, sind vorzugsweise solche aus Einheiten der allgemeinen Formel I

$$R_aR^1_b(OR^2)_cSiO_{\frac{4-a-b-c}{2}} \qquad (I),$$

worin

- **R** gleich oder verschieden sein kann und Wasserstoff oder einwertige, von basischem Stickstoff freie, SiC-gebundene organische Reste bedeutet,
- **$R^1$** gleich oder verschieden sein kann und einwertige, SiC-gebundene Reste mit basischem Stickstoff bedeutet,
- **$R^2$** gleich oder verschieden sein kann und Wasserstoffatom oder einwertige organische Reste bedeutet,
- **a** 0, 1, 2 oder 3,
- **b** 0, 1, 2 oder 3 und
- **c** 0, 1, 2 oder 3 ist,

mit der Maßgabe, daß **b** durchschnittlich mindestens 0,05 ist, die Summe aus **a**, **b** und **c** kleiner oder gleich 3 ist und der Rest **$R^1$** in Mengen von mehr als 0,5 Gewichtsprozent basischem Stickstoff pro Organopolysiloxanmolekül vorhanden ist.

Bevorzugt handelt es sich bei Rest **R** um gegebenenfalls substituierte Kohlenwasserstoffreste mit 1 bis 20 Kohlenstoffatomen, wobei Kohlenwasserstoffreste mit 1 bis 8 Kohlenstoffatomen, insbesondere der Methyl- und der Isooctylrest, besonders bevorzugt sind.

Vorzugsweise ist an jedes Siliciumatom, an das ein Wasserstoffatom gebunden ist, auch ein Kohlenwasserstoffrest, insbesondere ein Methylrest, gebunden.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der $\beta$-Phenylethylrest.

Beispiele für substituierte Kohlenwasserstoffreste als Rest **R** sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; Mercaptoalkylreste, wie der 2-Mercaptoethyl- und 3-Mercaptopropylrest; Cyanoalkylreste, wie der 2-Cyanoethyl- und 3-Cyanopropylrest; Acyloxyalkylreste, wie der 3-Acryloxypropyl- und 3-Methacryloxypropylrest; Hydroxyalkylreste, wie der Hydroxypropylrest und Reste der Formeln

```
  O
 / \
CH2-CHCH2O(CH2)3-
```

und $HOCH_2CH(OH)CH_2SCH_2CH_2$-.

Bevorzugt handelt es sich bei Rest **$R^1$** um einen Rest der allgemeinen Formel II

$R^3{}_2NR^4$- (II),

worin **$R^3$** gleich oder verschieden sein kann und Wasserstoff oder einwertiger, gegebenenfalls substituierter Kohlenwasserstoffrest bedeutet und **$R^4$** zweiwertiger Kohlenwasserstoffrest bedeutet.

Beispiele für Rest **$R^3$** sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (II) mindestens ein Wasserstoffatom gebunden.

Bevorzugt handelt es sich bei Rest **$R^4$** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest **$R^4$** sind der Methylen-, Ethylen-, Propylen-, Butylen-, Cyclohexylen-, Octadecylen-, Phenylen- und Butenylenrest.

Beispiele für Reste **$R^1$** sind

$H_2N(CH_2)_3$-,

$H_2N(CH_2)_2NH(CH_2)_2$-,
$H_2N(CH_2)_2NH(CH_2)_3$-,
$H_2N(CH_2)_2$-,
$H_3CNH(CH_2)_3$-,
$C_2H_5NH(CH_2)_3$-,
$H_3CNH(CH_2)_2$-,
$C_2H_5NH(CH_2)_2$-,
$H_2N(CH_2)_4$-,
$H_2N(CH_2)_5$-,
$H(NHCH_2CH_2)_3$-,
$C_4H_9NH(CH_2)_2NH(CH_2)_2$-,
cyclo-$C_6H_{11}NH(CH_2)_3$-,
cyclo-$C_6H_{11}NH(CH_2)_2$-,
$(CH_3)_2N(CH_2)_3$- ,
$(CH_3)_2N(CH_2)_2$- ,
$(C_2H_5)_2N(CH_2)_3$- und
$(C_2H_5)_2N(CH_2)_2$- .

Die Beispiele für Alkylreste **R** gelten im vollen Umfang auch für den Rest **$R^2$**.

Der bevorzugte durchschnittliche Wert für **a** ist 0 bis 2, insbesondere 0 bis 1,8.

Der bevorzugte durchschnittliche Wert für **b** ist 0,1 bis 0,6, insbesondere 0,15 bis 0,30.

Der bevorzugte durchschnittliche Wert für **c** ist 0 bis 0,8, insbesondere 0,01 bis 0,6.

Beispiele für Organopolysiloxane aus Einheiten der Formel (I) sind das Umsetzungsprodukt von $\alpha,\omega$-Dihydroxydimethylpolysiloxan und N-(2-Aminoethyl)-3-aminopropyltrimethoxysilan mit einer Viskosität von 20 bis 50 $mm^2/s$ (25 °C) und einer Aminzahl von 2,7 bis 3,2 (Siloxan i) sowie das Umsetzungsprodukt von $CH_3Si(OC_2H_5)_{0,8}O_{1,1}$ und N-(2-Aminoethyl)-3-aminopropyltrimethoxysilan mit einer Viskosität von 60 $mm^2/s$ (25 °C) und einer Aminzahl von 2,15 (Siloxan ii), wobei Siloxan i besonders bevorzugt ist und die Aminzahl der Anzahl der ml 1-n-HCl, die zum Neutralisieren von 1 g Substanz erforderlich sind, entspricht.

Vorzugsweise haben die Organopolysiloxane aus Einheiten der Formel (I) eine Viskosität von 5 bis 2500, insbesondere von 10 bis 500 $mm^2/s$, bezogen auf 25 °C.

Organopolysiloxane aus Einheiten der Formel (I) können in bekannter Weise, beispielsweise durch Äquilibrieren bzw. Kondensieren von aminofunktionellen Silanen mit Organopolysiloxanen, die frei von basischem Stickstoff sind, hergestellt werden.

Die organischen oder anorganischen Säuren, die zur Herstellung von Bestandteil (A) der erfindungsgemäßen Masse verwendet werden, können die gleichen sein, die auch bisher zur Herstellung von Salzen von organischer oder anorganischer Säure und Organopolysiloxan mit basischen Stickstoff aufweisenden, SiC-gebundenen Resten eingesetzt werden konnten. Beispiele für derartige Säuren sind HCl, $H_2SO_4$, Essigsäure, Trifluoressigsäure, Propionsäure, Diethylhydrogenphosphat. Es können auch Säurehalogenide eingesetzt werden, die im Kontakt mit Organopolysiloxan mit basischem Stickstoff gegebenenfalls zusammen mit Wasser sich entweder über die entsprechenden Säuren oder direkt zur Komponente (A) umsetzen. Beispiele für geeignete Säurehalogenide sind Alkyl- oder Arylsulfonylhalogenide, deren gegebenenfalls halogensubstituierte Alkyl- oder Arylreste dem vorstehenden Rest **R** entsprechen, wie Pentafluoroctylsulfonylchlorid. Propionsäure und Essigsäure sind bevorzugt und Essigsäure ist besonders bevorzugt.

Bei dem als Komponente (A) eingesetzten Organopolysiloxansalz kann es sich um eine einzelne Art dieses Salzes wie auch um ein Gemisch aus mindestens zwei Arten eines solchen Salzes handeln.

Der wasserabweisende Wirkstoff (B) enthält an sich bekannte Verbindungen, die auch bisher zum Wasserabweisendmachen von beispielsweise Baustoffen, Textilien, Leder oder Papier eingesetzt worden sind. Es können Mischungen aus verschiedenen wasserabweisend machenden Verbindungen oder nur eine Verbindung als wasserabweisender Wirkstoff (B) eingesetzt werden. Vorzugsweise werden als wasserabweisend machende Verbindungen Organosiliciumverbindungen mit basischem Stickstoff in Mengen von 0 bis 0,5 Gewichtsprozent, bezogen auf das Gewicht dieser Organosiliciumverbindung, Kieselsäureester oder fluororganische Verbindungen eingesetzt.

Bei den als wasserabweisend machende Verbindungen eingesetzten Organosiliciumverbindungen oder Kieselsäureestern handelt es sich vorzugsweise um solche aus Einheiten der allgemeinen Formel III

$$R^5{}_d(OR^6)_eSiO_{\frac{4-d-e}{2}} \qquad (III),$$

worin

**$R^5$** gleich oder verschieden sein kann und Wasserstoff oder einwertige, SiC-gebundene organische Reste bedeutet,

**$R^6$** gleich oder verschieden sein kann und Wasserstoffatom oder einwertige organische Reste bedeutet,

**d** 0, 1, 2, 3 oder 4 und

**e** 0, 1, 2, 3 oder 4 ist,

mit der Maßgabe, daß die Summe aus **d** und **e** kleiner oder gleich 4 ist und der Gehalt an basischem Stickstoff 0 bis 0,5 Gewichtsprozent, bezogen auf das Gewicht der jeweiligen Organosiliciumverbindung, beträgt.

Beispiele für Rest **$R^5$** sind die für Rest **R** angegebenen Beispiele sowie mit Aminogruppen substituierte Kohlenwasserstoffreste.

Beispiele für Rest **$R^6$** sind die für **$R^2$** angegebenen Beispiele.

Bei der Organosiliciumverbindung aus Einheiten der allgemeinen Formel (III) kann es sich um Silane handeln, d.h. die Summe aus **d** und **e** ist gleich 4.

Bei den Organosiliciumverbindungen aus Einheiten der allgemeinen Formel (III) kann es sich auch um Organosiloxane handeln, d.h. die Summe aus **d** und **e** ist kleiner oder gleich 3.

Bei den Verbindungen aus Einheiten der allgemeinen Formel (III) handelt es sich um Kieselsäureester, wenn **d** gleich 0 ist.

Bevorzugte Beispiele für Silane der allgemeinen Formel (III) sind die Organoalkoxysilane mit 1 oder 2 gleichen oder verschiedenen, gegebenenfalls halogensubstituierten, über SiC gebundenen einwertigen $C_1$-$C_{15}$-Kohlenwasserstoffresten, bei denen die übrigen Reste gleiche oder verschiedene $C_1$-$C_6$-Alkoxyreste sind. Besonders bevorzugt sind i-Octyltrimethoxysilan und i-Octyltriethoxysilan.

Bevorzugte Beispiele für Kieselsäureester der allgemeinen Formel (III) sind monomere und/oder polymere Kieselsaüreester mit $C_1$-$C_6$-Alkoxyresten und einer Viskosität von höchstens 20 $mm^2/s$ bei 25 °C. Es kann ein bestimmter Kieselsäureester oder ein Gemisch verschiedener Kieselsäureester verwendet werden. Bevorzugte Kieselsäureester enthalten $C_1$-$C_3$-Alkoxyreste und weisen eine Viskosität von 1 bis 5 $mm^2/s$ bei 25 °C auf. Beispiele bevorzugter Kieselsäureester sind Tetramethylsilikat, Tetraethylsilikat und Tetraisopropylsilikat.

Bevorzugte Beispiele für Organosiloxane der allgemeinen Formel (III) sind Alkylalkoxysiloxane, wie solche, die durch Umsetzung von Methyltrichlorsilan und einem $C_1$-$C_8$-Alkyltrichlorsilan, oder Phenyltrichlorsilan mit Methanol oder Ethanol in Wasser erhältlich sind, wie die Organopolysiloxane der Summenformeln

$CH_3Si(OC_2H_5)_{0,8}O_{1,1}$,
$C_6H_5Si(OC_2H_5)_{0,72}O_{1,14}$ oder
$(C_8H_{17}SiO_{3/2})(CH_3SiO_{3/2})_{1,8}x(CH_3O_{1/2})_{3,4}$ ,

mit einer Viskosität von vorzugsweise 5 bis 50 $mm^2/s$ bei 25 °C.

Weitere bevorzugte Beispiele für Organosiloxane der allgemeinen Formel (III) sind lineare Organopolysiloxane, die als Reste **$R^5$** in der Kette ausschließlich Methyl-, Phenyl- oder 3,3,3-Trifluorpropylreste enthalten und als endständige Gruppen Hydroxygruppen enthalten, wie die Polydimethylsiloxane mit an beiden Enden jeweils einer Hydroxylgruppe und einer Viskosität von vorzugsweise 100 bis 180 $mm^2/s$ bei 25 °C; lineare Organopolysiloxane, die als Reste **$R^5$** ausschließlich Methyl-, Phenyl- oder 3,3,3-Trifluorpropylreste enthalten, wie die Polydimethylsiloxane mit einer Viskosität von vorzugsweise 0,5 bis $10^5$ $mm^2/s$ bei 25 °C und lineare Organopolysiloxane, die als Reste **$R^5$** ausschließlich Methyl-, Phenyl- oder Wasserstoffreste enthalten, wie die Polydimethylsiloxane mit einem Wasserstoffgehalt von 0,05 bis 5,0 Gew.-% und einer Kettenlänge von vorzugsweise 20 bis 70 Dimethylsiloxaneinheiten und einer Viskosität von vorzugsweise 10 bis 1000 $mm^2/s$ bei 25 °C.

Weitere bevorzugte Beispiele für Organosiloxane der Formel (III) sind verzweigte Organosiloxane, die als Reste **$R^5$** ausschließlich Alkylreste mit 1 bis 12 Kohlenstoffatomen enthalten, wie die Polydimethylsiloxane, die aus 2 bis 20 Siloxaneinheiten der Formeln $R^7(CH_3)SiO_{3/2}$, $R^7(CH_3)SiO_{1/2}$ und $R^7SiO_{3/2}$ bestehen, wobei **$R^7$** einen Alkylrest mit 4 bis 12 Kohlenstoffatomen bedeutet.

Weitere bevorzugte Beispiele für Organosiloxane der allgemeinen Formel (III) sind Organosiloxanharze. Vorzugsweise hat der Index **d** dann einen Wert von 0,8 bis 1,8, insbesondere von 1,0 bis 1,7. Der Index **e** hat dann vorzugsweise einen Wert von 0 bis 0,5 und die Summe von **d+e** hat maximal einen Wert von 1,9. Bevorzugte Organosiloxanharze sind aus Einheiten der Formeln $R^8{}_3SiO_{1/2}$, $R^8{}_2SiO_{2/2}$ und $SiO_{4/2}$ oder aus Einheiten der Formeln $R^8{}_2SiO_{2/2}$ und $R^8SiO_{3/2}$ aufgebaut, wobei $\mathbf{R^8}$ die in der vorstehenden allgemeinen Formel III bezeichneten Reste $\mathbf{R^5}$ oder $\mathbf{OR^6}$ bedeutet. Ein bevorzugtes Beispiel für ein Organosiloxanharz ist das Harz der Summenformel

$MeSiO_{1,48}(OEt)_{0,04}$

(käuflich erwerblich unter dem Namen "BS 1321" bei der Wacker-Chemie GmbH, München) mit einem Schmelzpunkt von etwa 60 °C.

Wenn die als Komponente (B) eingesetzte Organosiliciumverbindung bei 20 °C und 1020 hPa fest ist, muß diese sich unter diesen Bedingungen zu mehr als 50 Gewichtsteilen in 100 Gewichtsteilen (A) oder 100 Gewichtteilen eines Gemisches aus (A) und Organosiliciumverbindung mit basischem Stickstoff in Mengen von 0 bis 0,5 Gewichtsprozent, bezogen auf das Gewicht dieser Organosiliciumverbindung, und/oder Kieselsäureestern lösen. Zur Erhöhung der Löslichkeit der festen Organosiliciumverbindungen werden insbesondere die vorstehend aufgeführten Silane, Siloxane mit einer Viskosität von höchstens 2 $mm^2/s$ bei 25 °C und monomeren Kieselsäureester der allgemeinen Formel (III) eingesetzt.

Bevorzugte fluororganische Verbindungen, die als wasserabweisender Wirkstoff (B) eingesetzt werden können, sind beispielsweise fluorierte, insbesondere perfluorierte Kohlenwasserstoffe, fluorierte Acryl- und Methacrylsäureester, Fluoralkansulfonsäuren und die Salze von fluorierten Carbonsäuren, insbesondere wenn diese einen Perfluoralkylrest mit mindestens 4 Kohlenstoffatomen aufweisen. Beispiele für bevorzugte einwertige fluorierte Carbonsäuresalze sind die Alkalimetallsalze von Arylcarbonsäuren, wie Benzoesäuren oder Naphthoesäuren mit einem oder zwei Perfluoralkylresten mit vorzugsweise 4 bis 18 Kohlenstoffatomen. Die fluororganischen Verbindungen weisen vorzugsweise einen Fluorgehalt von mindestens 10 Gew.-% auf.

Die Komponente (B) kann Lösungsvermittler enthalten, die weder Organosiliciumverbindungen noch Kieselsäureester sind. Bevorzugte Lösungsvermittler sind Alkylenglykole, wie Propylenglykol, als Weichmacher bekannte Mono- und Dicarbonsäureester mit insgesamt 10 bis 30 Kohlenstoffatomen im Molekül, wie Dioctyladipat und Dioctylphthalat und Ketone mit mindestens 5 Kohlenstoffatomen, wie Methylpentanon. Die Lösungsvermittler sind in der Komponente (B) vorzugsweise zu 0 bis 40, insbesondere zu 0 bis 10, Gewichtsprozent enthalten.

Die Komponente (B) kann für bestimmte Zwecke neben den vorstehenden Bestandteilen Zusatzstoffe enthalten. Geeignete Zusatzstoffe sind beispielsweise Gerbstoffe, Fungizide, Bakterizide, Konservierungsmittel, Algicide, Mikrobicide, Geruchsstoffe, Geschmackstoffe, Flammschutzmittel und ultraviolettes Licht absorbierende Feststoffe. Die Komponente (B) enthält Zusatzstoffe jeweils vorzugsweise in Mengen von 0,001 bis 1 Gewichtsprozent, insbesondere von 0,01 bis 0,1 Gewichtsprozent.

Im erfindungsgemäßen Verfahren werden vorzugsweise auf 100 Gewichtsteile Komponente (A) 40 bis 800, insbesondere 80 bis 500, Gewichtsteile der Komponente (B) eingesetzt, wobei zur Komponente (B) auch die zur Erhöhung der Löslichkeit der festen Organosiliciumverbindungen zugegebenen Organosiliciumverbindungen mit basischem Stickstoff in Mengen von 0 bis 0,5 Gewichtsprozent, bezogen auf das Gewicht dieser Organosiliciumverbindung und/oder Kieselsäureester, gegebenenfalls vorhandene Lösungsvermittler und Zusatzstoffe zählen. Zur Summe der Gewichtsteile der Komponenten (A) und (B) werden vorzugsweise noch so viele Gewichtsteile Wasser (C) gegeben, daß eine etwa 3 bis 20, insbesondere 6 bis 15, gewichtsprozentige anwendungsfertige wäßrige Imprägnierlösung vorliegt.

Die imprägnierende Zusammensetzung hat einen pH-Wert von vorzugsweise 4 bis 7, besonders bevorzugt 5.

Die imprägnierende Zusammensetzung wird durch Vermischen von Organopolysiloxan aus Einheiten der allgemeinen Formel (I) mit organischer oder anorganischer Säure zur Bildung der Komponente (A) und mit den Bestandteilen der Komponente (B) und anschließendes Vermischen mit Wasser (C) hergestellt. Vorzugsweise werden alle vorstehenden Vermischungsschritte bei einer Temperatur von 15 bis 120 °C, insbesondere bei 20 bis 30 °C, und einem Druck von 0,09 bis 0,11 MPa durchgeführt.

Die Mischung aus den Komponenten (A) und (B) ergibt mit Wasser spontan, d.h. ohne Aufwendung hoher mechanischer Energie, durch bloßes Zusammenbringen mit Wasser und Umrühren stabile wäßrige Verdünnungen. Dabei ist der erfindungsgemäß eingesetzte hydrophobe Wirkstoff (B) gleichmäßig und feinstdispers im Wasser verteilt.

Das Aufbringen der imprägnierenden Zusammensetzung auf das Holz kann dabei auf an sich bekannte Weise erfolgen, wie im Kesseldruckverfahren durch beispielsweise Volltränkung, Spartränkung, Wechseldrucktränkung, Vakuumtränkung oder Kombinationen davon, durch Saftverdrängung durch beispielsweise Drucksaugtränkung, Trogsaug- oder Trogdrucksaugtränkung, durch Diffusionstränkung oder durch Trogtränkung, wie durch Einstelltränke, sowie durch Streichen, Tauchen, Fluten und Sprühen.

Das erfindungsgemäße Verfahren hat den Vorteil, daß das behandelte Holz wasserabweisende Eigenschaften aufweist. Darüber hinaus gelingt es mit dem erfindungsgemäßen Verfahren, den als Komponente (B) in der erfindungsgemäßen Zusammensetzung hydrophoben Wirkstoff gleichmäßig und feinst in das zu behandelte Holz einzubringen. Der Ausdruck "Holz" ist hier nicht auf massives Holz beschränkt, sondern umfaßt auch aus Holz hergestellte Produkte, wie Spanplatten, Faserplatten, Holzspäne, Holzwolle und Holzmehl.

In den folgenden Beispielen beziehen sich alle Angaben von Teilen und Prozentsätzen, soweit nichts anderes angegeben ist, auf das Gewicht. Sofern nicht anders angegeben, werden die nachstehenden Beispiele bei einem Druck der umgebenden Atmosphäre, also etwa bei 0,10 MPa, und bei Raumtemperatur, also bei etwa 20 °C, bzw. bei einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben beziehen sich auf eine Temperatur von 25 °C.

**Beispiele**

**Herstellung von Organopolysiloxanen mit basischem Stickstoff**

**Siloxan A**

In einem mit Rührer, Tropftrichter und Rückflußkühler ausgestatteten 1-l-Dreihalskolben wurden unter Rühren zu einem Gemisch aus 0,2 g KOH in 4 g Methanol und 500 g eines in den endständigen Einheiten je eine Si-gebundene Hydroxylgruppe aufweisenden $\alpha,\omega$-Dihydroxymethylpolysiloxans mit einem durchschnittlichen Molekulargewicht von etwa 4000 g/Mol 150 g N(-2-Aminoethyl)-3-aminopropyltrimethoxysilan gegeben und das so erhaltene Gemisch 6 Stunden zum Sieden unter Rückfluß erwärmt; dann wurde auf 30 °C gekühlt und mit 2,5 ml 10 %iger Salzsäure vermischt. Durch Erwärmen auf bis zu 140 °C wurde schließlich das Methanol abdestilliert und das so erhaltene Organopolysiloxan von KCl durch Filtrieren befreit. Das so erhaltene Organopolysiloxan hatte eine Viskosität von 50 $mm^2/s$ bei 25 °C und enthielt 2,9 % basischen Stickstoff.

**Siloxan B**

Die Herstellung erfolgte analog der Herstellung von Siloxan A, jedoch mit 250 g N(-2-Aminoethyl)-3-aminopropyltrimethoxysilan. Das so erhaltene Organopolysiloxan hatte eine Viskosität von 20 $mm^2/s$ bei 25 °C und enthielt 3,2 % basischen Stickstoff.

**Beispiele 1 bis 11**

Bei Raumtemperatur wurden die nachstehend aufgeführten Bestandteile in der angegebenen Reihenfolge vermischt. In allen Beispielen wurden klare Lösungen erhalten. Jeweils ein Teil der klaren Lösung wurde anschließend mit 9 Teilen Wasser versetzt und verrührt. Es wurden transparente, stabile imprägnierende Zusammensetzungen erhalten.

**Beispiel 1**

15,4 g Siloxan B
80,8 g Isooctyltriethoxysilan
3,8 g Propionsäure (98 Gew.-%ig in Wasser)

**Beispiel 2**

25,0 g Siloxan A
57,7 g n-Octyltriethoxysilan
3,1 g Propionsäure (98 Gew.-%ig in Wasser)

**Beispiel 3**

40,0 g Siloxan B
47,0 g lineares Polydimethylsiliconöl mit Methylendgruppen und einer Viskosität von 0,65 $mm^2/s$
3,0 g Essigsäure (98 Gew.-%ig in Wasser)

**Beispiel 4**

48,6 g Siloxan B
48,6 g lineares Polydimethylsiliconöl mit Hydroxylendgruppen und einer Viskosität von 100 bis 180 $mm^2/s$
2,4 g Essigsäure (98 Gew.-%ig in Wasser)

**Beispiel 5**

38,8 g Siloxan B
38,8 g lineares Polydimethylsiliconöl mit Hydroxylendgruppen und einer Viskosität von 100 bis 180 $mm^2/s$
20,0 g Propylenglycol-1.2
2,4 g Essigsäure (98 Gew.-%ig in Wasser)

**Beispiel 6**

27,8 g Siloxan A
35,0 g Isooctyltrimethoxysilan
10,0 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)
20,8 g Organopolysiloxan der Summenformel $CH_3Si(OC_2H_5)_{0,8}O_{1,1}$ mit einem durchschnittlichen Molekulargewicht von etwa 600 g/Mol und einer Viskosität von etwa 20 $mm^2/s$
6,4 g Essigsäure (98 Gew.-%ig in Wasser)

**Beispiel 7**

24,0 g Siloxan A
46,0 g Isooctyltrimethoxysilan
10,0 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)
10,0 g Organopolysiloxan der Summenformel $(C_8H_{17}SiO_{3/2})(CH_3SiO_{3/2})_{1,8}x(CH_3O_{1/2})_{3,4}$ mit einer durchschnittlichen Viskosität von etwa 10 bis 30 $mm^2/s$
6,0 g Essigsäure (98 Gew.-%ig in Wasser)

**Beispiel 8**

19,5 g Siloxan A
24,5 g Isooctyltrimethoxysilan
7,0 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)
14,5 g Organopolysiloxan der Summenformel $CH_3Si(OC_2H_5)_{0,8}O_{1,1}$ mit einem durchschnittlichen Molekulargewicht von etwa 600 g/Mol und einer Viskosität von etwa 20 $mm^2/s$
4,5 g Essigsäure (98 Gew.-%ig in Wasser)
30,0 g Harz bestehend aus 80 % $MeSiO_{3/2}$ und 20 % $Me_2SiO_{2/2}$ Einheiten und mit einer durchschnittlichen Viskosität von $10^6$ $mm^2/s$

**Beispiel 9**

25,6 g Siloxan B
22,4 g Isooctyltrimethoxysilan
9,7 g Kieselsäureester der Summenformel $Si(OC_2H_5)_{2,3}O_{0,83}$ mit einer Viskosität von 4 $mm^2/s$ (erhältlich unter dem Handelsnamen "Silikat TES 40" bei der Wacker-Chemie GmbH, München)
19,2 g Organopolysiloxan der Summenformel $(C_8H_{17}SiO_{3/2})(CH_3SiO_{3/2})_{1,8}x(CH_3O_{1/2})_{3,4}$ mit einer durchschnittlichen Viskosität von etwa 10 bis 30 $mm^2/s$
6,0 g Essigsäure (98 Gew.-%ig in Wasser)
16,7 g bei Raumtemperatur festes Organopolysiloxan der Summenformel $MeSiO_{1,48}(OEt)_{0,04}$ (käuflich erwerblich unter, dem Namen "BS 1321" bei der Wacker-Chemie GmbH, München)

**Beispiel 10**

18,0 g Siloxan A
34,5 g Isooctyltrimethoxysilan
10,5 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)
7,5 g Organopolysiloxan der Summenformel $(C_8H_{17}SiO_{3/2})(CH_3SiO_{3/2})_{1,8}x(CH_3O_{1/2})_{3,4}$ mit einer durchschnittlichen Viskosität von etwa 10 bis 30 $mm^2/s$
4,5 g Essigsäure (98 Gew.-%ig in Wasser)
25,0 g Harz bestehend aus 80 % $MeSiO_{3/2}$ und 20 % $Me_2SiO_{2/2}$ Einheiten und mit einer durchschnittlichen Viskosität von $10^6$ $mm^2/s$

**Beispiel 11**

12,0 g Siloxan A
23,0 g Isooctyltrimethoxysilan
7,0 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)
5,0 g Organopolysiloxan der Summenformel $(C_8H_{17}SiO_{3/2})(CH_3SiO_{3/2})_{1,8}x(CH_3O_{1/2})_{3,4}$ mit einer durchschnittlichen Viskosität von etwa 10 bis 30 $mm^2/s$
3,0 g Essigsäure (98 Gew.-%ig in Wasser)
50,0 g lineares Polydimethylsiliconöl mit einem Gehalt von 1,6 % Wasserstoffatomen und einer Viskosität von 20 bis 25 $mm^2/s$
Ein mit der imprägnierenden Zusammensetzung gefüllter, 1 Liter fassender Glasbehälter wurde mit Fichtenstirnholz mit einer Restfeuchte von 9,2 Gew.-% (Größe 7 cm x 7 cm x 1 cm) belegt und in ein Drehkreuz eingespannt. Die Imprägnierung erfolgte durch Rotationsbewegung von 12 Umdrehungen pro Minute über 8 Stunden bei Raumtemperatur. Anschließend erfolgte die Trocknung der Probekörper bei 23 °C über 3 Wochen und 50 % relativer Luftfeuchtigkeit.

Die imprägnierten Probekörper wurden schwimmend auf Wasser bei 23 °C gelagert, mit Filterpapier von anhaftendem Wasser befreit und nach 30 bzw. 60 Minuten gewogen. Die Wasseraufnahme wurde in Gew.-% ermittelt. Die Imprägnierwirkung ergibt sich aus den Wasseraufnahmewerten (60-Minuten-Wert WA) von unbehandeltem zu imprägniertem Holz.

$$100 - \frac{\%\ \text{WA imprägniert} \times 100}{\%\ \text{WA unbehandelt}} = \text{Imprägnierwirkung}$$

Die Ergebnisse sind in Tabelle I zusammengefaßt.

Tabelle I

| Holzimprägnierung - Wasseraufnahme | | | |
|---|---|---|---|
| Behandlung des Probekörpers | Wasseraufnahme (Gew.-%) | | Imprägnierwirkung gegenüber unbehandeltem Holz (%) |
| | nach 30 Min. | nach 60 Min. | |
| unbehandelt | 40,6 | 49,4 | - |
| Beispiel 1 | 11,5 | 15,1 | 69,5 |
| Beispiel 2 | 2,1 | 3,6 | 92,8 |
| Beispiel 3 | 7,2 | 11,4 | 77 |
| Beispiel 4 | 2,5 | 4,0 | 91,2 |
| Beispiel 5 | 7,8 | 10,6 | 78,5 |
| Beispiel 6 | 3,2 | 4,6 | 90,7 |
| Beispiel 7 | 8,3 | 12,1 | 75,5 |
| Beispiel 8 | 2,0 | 3,6 | 92,8 |
| Beispiel 9 | 4,8 | 7,5 | 84,8 |
| Beispiel 10 | 5,4 | 8,6 | 82,6 |
| Beispiel 11 | 2,6 | 3,8 | 92,3 |

**Beispiele 12 und 13**

Wie in den Beispielen 1 bis 11 wurden aus den nachstehend aufgeführten Bestandteilen transparente, stabile imprägnierende Zusammensetzungen hergestellt, mit der Ausnahme, daß die klaren Lösungen mit 10 Teilen Wasser versetzt wurden.

**Beispiel 12**

40,0 g Siloxan A
5,0 g Essigsäure (98 Gew.-%ig in Wasser)
40,0 g Methyltrimethoxysilan
10,0 g Kieselsäureester der Summenformel $Si(OC_2H_5)_4$ mit einer Viskosität von 1,0 $mm^2/s$ (erhältlich unter dem Handelsnamen "Silikat TES 28" bei der Wacker-Chemie GmbH, München)

**Beispiel 13**

40,0 g Siloxan A
5,0 g Essigsäure (98 Gew.-%ig in Wasser)
50,0 g Harz bestehend aus 80 % $MeSiO_{3/2}$ und 20 % $Me_2SiO_{2/2}$ Einheiten und mit einer durchschnittlichen Viskosität von $10^6$ $mm^2/s$
50,0 g Isooctyltrimethoxysilan
Mit den imprägnierenden Zusammensetzungen wurden Probekörper aus Fichtenholz der Abmessungen 4 cm x 4 cm x 10 cm im Vakuumdruckverfahren (1 Stunde Vakuum bei 0,01 MPa, danach 8 Stunden bei 1 MPa) behandelt und anschließend 4 Wochen bei 23 °C und 50 % relativer Luftfeuchtigkeit gelagert.

Die imprägnierten Probekörper wurden 24 Stunden schwimmend auf Wasser bei 23 °C gelagert, danach durch Betupfen mit Filterpapier von anhaftendem Wasser befreit und gewogen.

Die Ergebnisse sind in Tabelle II zusammengefaßt.

Tabelle II

| Behandlung des Probekörpers | Wasseraufnahme in Gew.-% |
|---|---|
| unbehandelt | 60 |
| Beispiel 12 | 20 |
| Beispiel 13 | 14 |

**Patentansprüche**

1. Verfahren zur Imprägnierung von Holz, bei dem das Holz mit einer Zusammensetzung behandelt wird, welche
   (A) Salz von organischer oder anorganischer Säure und Organopolysiloxan, welches SiC-gebundene Reste mit basischem Stickstoff in Mengen von mindestens 0,5 Gewichtsprozent basischem Stickstoff, bezogen auf das Gewicht dieses Organopolysiloxans, aufweist,
   (B) wasserabweisenden Wirkstoff der bei 20 °C und 1020 hPa nicht fest ist, mit der Maßgabe, daß der wasserabweisende Wirkstoff auch eine bei 20 °C und 1020 hPa feste Organosiliciumverbindung sein kann, die sich unter diesen Bedingungen zu mehr als 50 Gewichtsteilen in 100 Gewichtsteilen (A), gegebenenfalls im Gemisch mit Organosiliciumverbindung mit basischem Stickstoff in Mengen von 0 bis 0,5 Gewichtsprozent, bezogen auf das Gewicht dieser Organosiliciumverbindung und/oder Kieselsäureestern löst und
   (C) Wasser
   enthält.

2. Verfahren nach Anspruch 1, wobei die Organopolysiloxane, durch deren Umsetzung mit organischer oder anorganischer Säure Bestandteil (A) der imprägnierenden Zusammensetzung erhältlich ist, solche aus Einheiten der allgemeinen Formel I sind

$$R_aR^1_b(OR^2)_cSiO_{\frac{4-a-b-c}{2}} \qquad (I),$$

   worin
   **R** gleich oder verschieden sein kann und Wasserstoff oder einwertige, von basischem Stickstoff freie, SiC-gebundene organische Reste bedeutet,
   **$R^1$** gleich oder verschieden sein kann und einwertige, SiC-gebundene Reste mit basischem Stickstoff bedeutet,
   **$R^2$** gleich oder verschieden sein kann und Wasserstoffatom oder einwertige organische Reste bedeutet,
   **a** 0, 1, 2 oder 3,
   **b** 0, 1, 2 oder 3 und
   **c** 0, 1, 2 oder 3 ist,
   mit der Maßgabe, daß **b** durchschnittlich mindestens 0,05 ist, die Summe aus **a**, **b** und **c** kleiner oder gleich 3 ist und der Rest **$R^1$** in Mengen von mehr als 0,5 Gewichtsprozent basischem Stickstoff pro Organopolysiloxanmolekül vorhanden ist.

3. Verfahren nach Anpruch 1 oder 2, wobei als wasserabweisend machende Verbindungen Organosiliciumverbindungen mit basischem Stickstoff in Mengen von 0 bis 0,5 Gewichtsprozent, bezogen auf das Gewicht dieser Organosiliciumverbindung, Kieselsäureester und/oder fluororganische Verbindungen eingesetzt werden.

4. Verfahren nach einem der Ansprüche 1 bis 3, wobei als wasserabweisend machende Verbindungen Organosiliciumverbindungen oder Kieselsäureester aus Einheiten der allgemeinen Formel III eingesetzt werden,

$$R^5{}_d(OR^6)_eSiO_{\frac{4-d-e}{2}} \qquad (III),$$

worin

**$R^5$** gleich oder verschieden sein kann und Wasserstoff oder einwertige, SiC-gebundene organische Reste bedeutet,

**$R^6$** gleich oder verschieden sein kann und Wasserstoffatom oder einwertige organische Reste bedeutet,

**d** 0, 1, 2, 3 oder 4 und

**e** 0, 1, 2, 3 oder 4 ist,

mit der Maßgabe, daß die Summe aus **d** und **e** kleiner oder gleich 4 ist und der Gehalt an basischem Stickstoff 0 bis 0,5 Gewichtsprozent, bezogen auf das Gewicht der jeweiligen Organosiliciumverbindung, beträgt.

**5.** Verfahren nach einem der Ansprüche 1 bis 4, wobei die Komponente (B) als Zusatzstoffe Gerbstoffe, Fungizide, Bakterizide, Konservierungsmittel, Algicide, Mikrobicide, Geruchsstoffe, Geschmackstoffe, Flammschutzmittel und/oder ultraviolettes Licht absorbierende Feststoffe enthält.

Europäisches Patentamt

# EUROPÄISCHER RECHERCHENBERICHT

Nummer der Anmeldung
EP 94 10 6201

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | US-A-4 757 106 (H. MAYER ET AL.)<br>* Spalte 6, Zeile 26; Ansprüche *<br>--- | 1-5 | B27K3/15<br>B27K3/50 |
| D,Y | US-A-5 073 195 (DOW CORNING CORPORATION)<br>* Spalte 4, Zeile 21-32 *<br>* Spalte 4, Zeile 59-65 *<br>* Spalte 9; Beispiel vii *<br>* Ansprüche *<br>--- | 1-5 | |
| D,Y | US-A-4 661 551 (H.MAYER ET AL.)<br>* Spalte 1, Zeile 20-41 *<br>* Spalte 4, Zeile 3-54; Ansprüche *<br>--- | 1-5 | |
| D,A | DE-A-39 00 303 (DEGUSSA)<br>--- | | |
| A | US-A-5 039 724 (U.DEMLEHNER ET AL.)<br>--- | | |
| A | US-A-5 120 581 (D.E.BRUNKEN ET AL.)<br>----- | | |

| RECHERCHIERTE SACHGEBIETE (Int.Cl.5) |
|---|
| B27K |

Der vorliegende Recherchenbericht wurde für alle Patentansprüche erstellt

| Recherchenort | Abschlußdatum der Recherche | Prüfer |
|---|---|---|
| DEN HAAG | 26. Juli 1994 | Dalkafouki, A |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)